# EUROPEAN PATENT APPLICATION

(11) **EP 4 517 972 A1**
(43) Date of publication of application: **05.03.2025**
(21) Application number: 22952501.9
(22) Date of filing: 29.07.2022
(51) Int. Cl.: H01M 50/244, H01M 50/249

(54) **BATTERY CASE, BATTERY AND ELECTRIC DEVICE**

(71) Applicant: Contemporary Amperex Technology (Hong Kong) Limited, Central, Central And Western Hong Kong (HK)
(72) Inventor: YAO, Pengcheng, Ningde, Fujian 352100 (CN); ZHANG, Wenhui, Ningde, Fujian 352100 (CN); WANG, Peng, Ningde, Fujian 352100 (CN); CHEN, Xingdi, Ningde, Fujian 352100 (CN)
(74) Representative: Gong, Jinping
(86) International application number: PCT/CN2022/109082
(87) International publication number: WO 2024/021054

(57) **Abstract**

A casing body of a battery, a battery and an electricity-consuming apparatus are provided by the present application. The casing body includes a carrying plate, a side beam and a reinforcing plate. The carrying plate includes a carrying region and a connecting region, and the carrying region is configured to place a battery cell. The side beam and the carrying plate enclose to form an accommodating chamber for accommodating the battery cell, and the side beam is connected to the connecting region. At least a part of the reinforcing plate overlaps with the connecting region in a thickness direction of the carrying plate and is connected to the connecting region. In embodiments of the present application, the reinforcing plate can be provided, and the reinforcing plate can at least partly overlaps with the connecting region, so that the thickness at a position of the connecting region can increase, the structural strength of the battery at the connecting region can be improved, and the risk of deformation or damage of the connecting region under an action of factors such as an impact of an external force can be reduced

## Description

### TECHNICAL FIELD

The present application relates to the technical field of battery, and in particular to a casing body of a battery, a battery and an electricity-consuming apparatus.

### BACKGROUND

At present, a battery can be widely used in various electricity-consuming apparatus such as a vehicle. During a working process, some electricity-consuming apparatus may often move or vibrate. In this case, how to improve the structural strength of the battery is extremely important.

### SUMMARY

The present application provides a casing body of a battery, a battery and an electricity-consuming apparatus, which can improve the structural strength.

In a first aspect, the casing body of the battery is provided by embodiments of the present application. The casing body includes a carrying plate, a side beam and a reinforcing plate. The carrying plate includes a carrying region and a connecting region, and the carrying region is configured to place a battery cell. The side beam and the carrying plate enclose to form an accommodating chamber for accommodating the battery cell, and the side beam is connected to the connecting region. At least a part of the reinforcing plate overlaps with the connecting region in a thickness direction of the carrying plate and is connected to the connecting region.

In embodiments of the present application, the reinforcing plate can be provided, and the reinforcing plate can at least partly overlaps with the connecting region, so that the thickness at a position of the connecting region can increase, the structural strength of the battery at the connecting region can be improved, and the risk of deformation or damage of the connecting region under an action of factors such as an impact of an external force can be reduced.

In some embodiments, a minimum thickness of the reinforcing plate is H, and 0.2 mm≤H≤30 mm.

In the embodiments of the present application, H can be set between 0.2 mm and 30 mm. Under a premise that an overall weight of the battery is not greatly affected, the structural strength of the battery can be improved, the risk of deformation or damage of the battery can be reduced, and the reliability of the battery can be improved. Optionally, 0.5mm≤H≤10mm. Exemplarily, H may be one of 0.5 mm, 1 mm, 5 mm, 8 mm and 10 mm.

In some embodiments, a weight of the battery is M, and H and M satisfy: 0.0002 mm/kg≤H/M≤1 mm/kg.

In the embodiments of the present application, H/M can be set between 0.0002 mm/kg and 1 mm/kg. While ensuring the high energy density of the battery, the structural strength of the battery can be improved, and the risk of deformation or damage of the battery under the impact of the external force can be reduced. Optionally, 0.0006 mm/kg≤H/M≤0.2 mm/kg. Exemplarily, H/M may be one of 0.0006 mm/kg, 0.003 mm/kg, 0.01 mm/kg, 0.05 mm/kg and 0.2 mm/kg.

In some embodiments, a minimum thickness of the reinforcing plate may be less than or equal to a minimum thickness of the carrying plate.

In the embodiments of the present application, the reinforcing plate can be connected to the carrying plate to increase the thickness of the battery at a place at least partially on the carrying plate, so that the structural strength of the battery can be improved. At the same time, the embodiments of the present application further takes into account the lightweight design of the battery. Thus, the thickness H can be set to be less than or equal to the minimum thickness of the carrying plate, so that a volume of the entire reinforcing plate can be smaller than a volume of the carrying plate. The overall weight of the battery can be reduced as much as possible while improving the structural strength.

In some embodiments, the reinforcing plate is located at a side of the carrying plate away from the accommodating chamber.

In the embodiments of the present application, the reinforcing plate can be arranged at the side of the carrying plate away from the accommodating chamber, so that the arrangement of the reinforcing plate will not occupy an internal space of the accommodating chamber and will not affect an available space of the battery cell in the accommodating chamber, thereby ensuring the energy density of the battery. At the same time, it can also reduce the difficulty of manufacturing the battery, which is conducive to the large-scale production and manufacture.

In some embodiments, the carrying region at least partially overlaps with the reinforcing plate in the thickness direction.

In the embodiments of the present application, the carrying region overlaps with at least partially with the reinforcing plate, so that the reinforcing plate can increase the overall thickness of at least some parts of the carrying region, the impact of vibration can be reduced, the risk of debonding between the carrying plate and the battery cell can be reduced, and the reliability of a corresponding position between the carrying plate and the battery cell can increase. At the same time, the reinforcing plate can also improve the structural strength of at least some parts of the carrying region, thereby reducing the impact of the external force or other factors on the battery cell.

In some embodiments, the reinforcing plate is connected to the side beam.

In the embodiments of the present application, the side beam can be connected to the carrying plate, and positions of the two can be kept relatively fixed. On this basis, the reinforcing plate is connected to the side beam, so that the reinforcing plate and the side beam can keep fixing, thereby improving the reliability of a corresponding position between the reinforcing plate and the carrying plate.

In addition, during a battery-manufacturing process, the reinforcing plate can be connected and fixed to the side beam firstly, and then the reinforcing plate and side beam can be mounted as a whole onto the carrying plate to ensure the reliability of the corresponding position between the reinforcing plate and the side beam. Alternatively, the reinforcing plate can be mounted on the carrying plate firstly, and then the side beam can be fixed to the reinforcing plate to improve the reliability of the connection between the carrying plate and the side beam.

In some embodiments, a plurality of side beams can be provided, the plurality of side beams are arranged in a circumferential direction of the carrying plate, and the reinforcing plate is connected to at least one of the plurality of side beams.

In the embodiments of the present application, the plurality of side beams can be sequentially connected end-to-end to form a closed-loop structure, and the plurality of side beams can be located at an outer peripheral side of the accommodating chamber. At the same time, the reinforcing plate can be connected to at least one of the s plurality of ide beams to improve the reliability of the corresponding position among the side beams, reinforcing plate and carrying plate, thereby ensuring the overall structural stability of the battery under different working conditions.

In some embodiments, the plurality of side beams include two first side beams and two second side beams, the two first side beams are arranged to be spaced apart from each other in a width direction of the casing body, the two second side beams are arranged to be spaced apart from each other in a length direction of the casing body, and each of the two second side beams is connected to the two first side beams. Two reinforcing plates are provided, and the two reinforcing plates are arranged to be spaced apart from each other in the width direction and connected to the two first side beams respectively.

In the embodiments of the present application, two reinforcing plates can be provided, and the two reinforcing plates can be connected to the two first side beams respectively, thereby improving the structural strength of carrying plate corresponding to the connecting region between the battery cell and the first side beams.

In some embodiments, a part of the carrying plate is located between the first side beams and the reinforcing plates, and is connected to the first side beams and the reinforcing plates.

In the embodiments of the present application, the relative position relationship between the first side beams and the reinforcing plates can be controlled, so that a part of the carrying plates can be simultaneously located between the first side beams and the reinforcing plate. The connection among the carrying plate, reinforcing plate and the first side beams can be simultaneously achieved through the part of the carrying plate. Compared to the scheme of mounting the first side beams and reinforcing plate in a staggered position on the carrying plate, this design can allow more regions on the carrying plate for placing the battery cell, thereby improving the energy density of the battery.

In some embodiments, the reinforcing plate and the first side beams are integrally formed.

In the embodiments of the present application, the reinforcing plate and the first side beams can be integrally formed, so that it can improve the reliability of the connection between the reinforcing plate and the first side beams, and reduce the risk of connection failure caused by the impact of the external force or other factors. In addition, during the battery-manufacturing process, the reinforcing plate and the first side beams can be integrally formed firstly, so as to connect the reinforcing plate with the first side beams as a whole, then the whole formed by the reinforcing plate and the first side beams can be connected at a specific position of the carrying plate, so that the accuracy of the positions of the first side beams, the reinforcing plate and the carrying plate can be improved.

In a second aspect, the embodiments of the present application provide a battery, including the casing body according to any one of embodiments as described above and a battery cell. The battery cell is accommodated in the accommodating chamber and connected to the carrying region of the carrying plate.

In some embodiments, the reinforcing plate at least partially overlaps with the battery cell in the thickness direction of the carrying plate.

In the embodiments of the present application, the reinforcing plate can at least partially overlap with the battery cell, so that the reinforcing plate can also have a structural reinforcement effect on at least a part of the battery region corresponding to where the battery cells are located, and the structural strength of the battery can be further improved.

In some embodiments, a plurality of battery cells are provided, the plurality of battery cells form a battery pack, and a gap is arranged between the battery pack and the side beam. At least part of the reinforcing plate is arranged opposite to the gap in the thickness direction.

In the embodiments of the present application, the gap makes the structural strength of the battery at the position insufficient. Therefore, in the embodiments of the present application, at least part of the reinforcing plate may be arranged opposite to the gap, so that the structural strength and the pressure-proof capacity of the battery at the position of the gap can be improved, and the risk of deformation or damage in the gap can be reduced.

In some embodiments, the battery further includes a heat-managing portion, and the heat-managing portion is configured to adjust a temperature of the battery cell. A projection of the heat-managing portion at least partially overlaps with a projection of the reinforcing plate in the thickness direction.

In the embodiments of the present application, the projection of the heat-managing portion can at least partially overlap with the projection of the reinforcing plate, so that the structural strength at this position can be improved, the impact of the external force or other factors on the heat-managing portion can be reduced, and the reliability and safety of the battery can be improved.

In a third aspect, the embodiments of the present application provide an electricity-consuming apparatus, including the battery according to any one of embodiments as described above. The battery is configured to provide electrical power.

### BRIEF DESCRIPTION OF THE DRAWINGS

In order to more clearly illustrate the technical solutions of the embodiments of the present application, the drawings to be used in the description of the embodiments of the present application will be described briefly below. Obviously, the drawings in the following description are merely some embodiments of the present application. For those skilled in the art, other drawings can also be obtained according to these drawings without the inventive labor.
Fig. 1 shows a structural schematic view of a vehicle according to some embodiments of the present application;
Fig. 2 shows an exploded schematic view of a battery according to some embodiments of the present application;
Fig. 3 shows an exploded schematic view of casing body of a battery cell according to some embodiments of the present application;
Fig. 4 shows a structural schematic view of a carrying plate in a battery according to some embodiments of the present application;
Fig. 5 shows a schematic partial cross-sectional view of a battery provided by some embodiments of the present application;
Fig. 6 shows a partial enlarged view of region Q in Fig. 5; and
Fig. 7 shows a cooperative structural schematic view of a first side beam and a reinforcing plate of a battery provided by some embodiments of the present application.

In the drawings, the drawings are not drawn to actual scale.

In the drawings:
1000-vehicle;
100-battery; 200-controller; 300-motor; 400-casing body;
11-carrying plate; 12-side beam; 121-first side beam; 122-second side beam; 13-reinforcing plate; 14-accommodating chamber; 15-substrate;
20-battery cell;
30-heat-managing portion; 31-heat-exchanging plate; 32-confluence tube
A-carrying region; 8-connecting region; B1-first part; B2-second part; C-support region;
X-width direction; Y-length direction; Z-thickness direction.

### DETAILED DESCRIPTION

In order to make the objects, technical solutions and advantages of the embodiments of the present application more clear, the technical solutions of the embodiments of the present application will be clearly and completely described below in conjunction with the drawings of the embodiments of the present application. It is apparent that the described embodiments are a part of the embodiments of the present application, and not all of them. Based on the described embodiments of the present application, all other embodiments obtained by those skilled in the art fall within the scope of the application.

Unless otherwise defined, technical terms or scientific terms used in the present disclosure should be interpreted according to common meanings thereof as commonly understood by those of ordinary skills in the art. The terms used in the description in the present application are only for the purpose of describing specific embodiments and are not intended to limit the present application. The terms "including" and "having" in the description and the claims of the present application and the above description of the drawings, and any variations thereof are intended to cover non-exclusive inclusions. The terms "first", "second", etc. in the description and the claims of the present application or the above-mentioned drawings are used to distinguish different objects, rather than to describe a specific order or a primary-secondary relationship.

The "embodiments" referred in the present application means that specific features, structures or characteristics described in conjunction with the embodiments may be included in at least one embodiment of the present application. This word appeared in various places in the description does not necessarily refer to the same embodiment, nor is it an independent or alternative embodiment mutually exclusive with other embodiments.

In the description of the present application, it should be noted that, unless otherwise clearly specified and limited, the terms "mount", "connecting" and "connection" and "attach" should be understood in a broad sense, for example, it can be a fixed connection, a detachable connection, or an integral connection, it can be connected directly, it can be connected indirectly through an intermedium, or it can be a communication between two elements at insides thereof. For those of ordinary skill in the art, the specific meaning of the above-mentioned terms in the present application can be understood according to specific situations.

The term "and/or" in the present application is merely an association relationship describing associated objects, which means that there can be three types of relationships. For example, "A and/or B" can mean three cases that there is only A, there are A and B at the same time, and there is only B. In addition, the punctuation mark "/" in the present application generally indicates that the related objects of the preceding content and following content are in an "or" relationship.

In the embodiments of the present application, the same reference numerals denote the same components, and for the sake of brevity, in different embodiments, detailed descriptions of the same components are omitted. It should be understood that the thickness, length, width and other dimensions of the various components in the embodiments of the present application shown in the drawings, as well as the overall thickness, length and width, etc., of the integrated device are only exemplary descriptions, and should not constitute any limitation to the present application.

The "plurality" in the present application refers to two or more (including two).

In the present application, a battery cell may include a lithium ion secondary battery cell, a lithium ion primary battery cell, a lithium sulfur battery cell, a sodium lithium ion battery cell, a sodium ion battery cell or a magnesium ion battery cell, etc., which is not limited in the embodiment of the present application. The battery cell can be in a shape of cylinder, flat shape, rectangular, or other shapes, which is not limited in the embodiments of the present application.

A battery mentioned in the embodiments of the present application refers to a single physical module that includes one or more battery cells to provide higher voltage and capacity. The battery generally includes a housing for packaging one or more battery cells. The housing can prevent liquid or other foreign objects from affecting the charging or discharging of the battery cells.

The battery cell includes an electrode assembly and an electrolyte, and the electrode assembly includes a positive electrode sheet, a negative electrode sheet and a separator. The battery cell mainly relies on the movement of metal ions between the positive electrode sheet and the negative electrode sheet to work. The positive electrode sheet includes a positive electrode current collector and a positive electrode active material layer. The positive electrode active material layer coats on a surface of the positive electrode current collector. The positive electrode current collector includes a positive electrode current collecting portion and a positive electrode tab protruding from the positive electrode current collecting portion. The positive electrode current collecting portion is coated with the positive electrode active material layer, and at least part of the positive electrode tab is not coated with the positive electrode active material layer. Taking a lithium ion battery as an example, a material of the positive electrode current collector may be aluminum, the positive electrode active material layer includes a positive electrode active material, and the positive electrode active material may be lithium cobaltate, lithium iron phosphate, ternary lithium, lithium manganite or the like. The negative electrode sheet includes a negative electrode current collector and a negative electrode active material layer. The negative electrode active material layer coats on a surface of the negative electrode current collector. The negative electrode current collector includes a negative electrode current collecting portion and a negative electrode tab protruding from the negative electrode current collecting portion. The negative electrode current collecting portion is coated with the negative electrode active material layer, and at least part of the negative electrode tab is not coated with the negative electrode active material layer. A material of the negative electrode current collector may be copper, the negative electrode active material layer includes the negative electrode active material, and the negative electrode active material may be carbon or silicon, etc.. In order to ensure that a large current is passed without fusing, the number of the positive electrode tabs is multiple, and the positive electrode are stacked together; the number of the negative electrode tabs is multiple, and the negative electrode tabs are stacked together. A material of the separator may be PP (polypropylene) or PE (polyethylene), etc. In addition, the electrode assembly may be a winding-type structure or a laminated-type structure, which is not limited in the embodiments of the present application.

For an electricity-consuming apparatus such as a vehicle, the battery needs to be fixed in a fixing position on the electricity-consuming apparatus. The applicant notes that during a long-term use of the electricity-consuming apparatus, a casing battery of the battery is prone to deformation, so that it may affect the normal use of the battery and raise a safety risk.

After researching, the applicant found that the above issues occur because: at an inside of the battery, the battery cell may be fixed to a carrying plate of the casing battery, and the battery cell is usually arranged within a central region of the carrying plate, thus, a part of the carrying plate located within the central region and the battery cell may form a whole together, so as to have higher structural strength.

Due to the limitations of the internal structure of the battery, a certain space needs to be provided between the battery cell and a side beam to accommodate other functional components of the battery. Furthermore, an edge region of the carrying plate near the side beam cannot achieve adhesion with the battery cell. Therefore, the structural strength at the edge region of the carrying plate is weak. Under the impact of the external force or other factors, the edge region of the carrying plate is more prone to deformation or damage compared to a central region, so that it may affect the normal use of the battery.

Based on the above issues discovered by the applicant, the present application provides a casing body of a battery, a battery and an electricity-consuming apparatus. The casing body includes a carrying plate, a side beam and a reinforcing plate. The carrying plate includes a carrying region and a connecting region, and the carrying region is configured to place a battery cell. The side beam and the carrying plate enclose to form an accommodating chamber for accommodating the battery cell, and the side beam is connected to the connecting region. At least a part of the reinforcing plate overlaps with the connecting region in a thickness direction of the carrying plate and is connected to the connecting region.

In the present application, the reinforcing plate can be provided, and the reinforcing plate can at least partly overlaps with the connecting region, so that the thickness at a position of the connecting region can increase, the structural strength of the battery at the connecting region can be improved, and the risk of deformation or damage of the connecting region under an action of factors such as an impact of an external force can be reduced.

The technical solution described in the embodiments of the present application is applicable to the electricity-consuming apparatus using the battery. The electricity-consuming apparatus may be, for example, an electric vehicle, an electric car, a ship, a spacecraft, an electric toy, an electric tool or the like. Herein, the spacecraft may be, for example, an aircraft, a rocket, a space shuttle, a spaceship or the like; the electric toy may include, for example, a fixing-type or movable-type electric toy, such as an electric car toy, an electric ship toy, an electric aircraft toys or the like; the electric tool may include, for example, a metal-cutting electric tool, a grinding electric tool, an assembling electric tool and a railway-using electric tool (specifically, such as an electric drill, an electric bench grinder, an electric wrench, an electric screwdriver, an electric hammer, an impacting electric drill, a concrete vibrator, and an electric planer).

The battery cell described in the embodiments of the present application is not limited to be applicable to the electricity-consuming apparatus as described above, but for the sake of brevity, the following embodiments take the electric vehicle as an example for illustration.

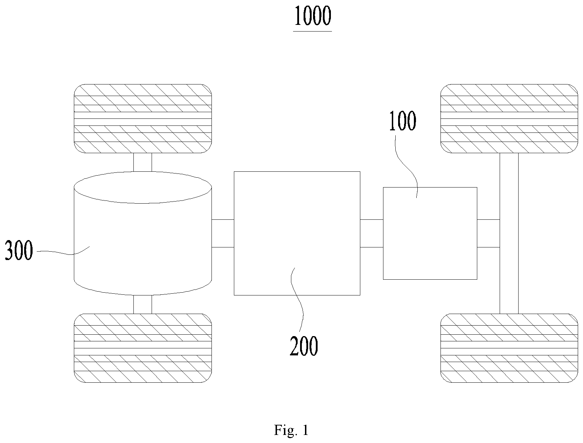

Referring to Fig. 1, a vehicle 1000 can be a fuel vehicle, a gas vehicle or a new energy vehicle. The new energy vehicles can be a pure electric vehicle, a hybrid vehicle, an extended-range vehicle and the like. A battery 100 may be arranged at an inside of the vehicle 1000. Specifically, for example, the battery 100 may be arranged at the bottom, the front or the back of the vehicle 1000. The battery 100 can be used to supply power to the vehicle 1000, for example, the battery 100 can be used as an operating power source of the vehicle 1000. The vehicle 1000 may further include a controller 200 and a motor 300, and the controller 200 can be used to, for example, control the battery 100 to supply power to the motor 300. The battery 100 can further be used to start, navigate and drive the vehicle 1000. Certainly, the battery 100 can also be used to drive vehicle 1000, replacing or partially replacing fuel or natural gas to provide power for vehicle 1000.

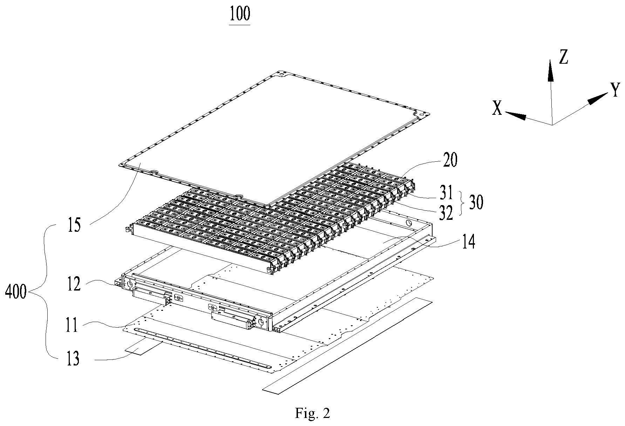

Referring to Fig. 2, the battery may include a casing body 400 and a battery cell 20, and the battery cell 20 can be accommodated in the accommodating chamber 14 of the casing body 400.

In the battery 100, one or a plurality of battery cells 20 may be provided. If there are the plurality of battery cells 20, the plurality of battery cells 20 can be connected in series, in parallel or in mixed. The mixed connection means that the plurality of battery cells 20 may include the connection in series and the connection in parallel. The plurality of battery cells 20 may be directly connected in series, in parallel or in combination together, and then all the battery cells 20 are accommodated in the casing body 400 as a whole. It is also possible that all the battery cells 20 may be connected in series, in parallel or in mixed to form the battery module (not shown in drawings) firstly, and then the plurality of battery modules are connected in series, in parallel or in mixed to form a whole, and accommodated in the casing body 400.

The structure of the casing body 400 will be described in detail below with reference to the drawings.

The casing body of the battery is provided by embodiments of the present application. Referring to Fig. 2 to Fig. 4, the casing body includes the carrying plate 11, the side beam 12 and the reinforcing plate 13. The carrying plate 11 includes the carrying region A and the connecting region B, and the carrying region A is configured to place the battery cell 20. The side beam 12 and the carrying plate 11 enclose to form the accommodating chamber 14 for accommodating the battery cell 20, and the side beam 12 is connected to the connecting region B. At least a part of the reinforcing plate 13 overlaps with the connecting region B in the thickness direction Z of the carrying plate 11 and is connected to the connecting region B.

The carrying plate 11 can be used as a bottom plate of the casing body, or can be used as the top plate of the casing body, which is not limited in the embodiments of the present application. Exemplarily, in the vehicle, the battery needs to be mounted on a chassis of the vehicle. The battery can be mounted upside down, and the carrying plate 11 and the chassis of the vehicle can be connected by bolt connection or the like, so as to achieve the fixing between the battery and the vehicle.

It should be noted that the embodiments of the present application describes the carrying plate 11 as a part of the casing body of the battery. In practical situations, the carrying plate 11 can also become as a part of the vehicle, that is, the carrying plate 11 can be manufactured as a part of the chassis of the vehicle, which is not limited by the embodiments of the present application.

The carrying plate 11 and the side beam 12 are enclosed together to form the accommodating chamber 14. The connection method between carrying plate 11 and side beam 12 include but are not limited to bonding, welding, bolt connection and the like. The battery cell 20 can be arranged in the accommodating chamber 14 and placed on the carrying plate 11. Herein, the number of battery cells 20 in the accommodating chamber 14 will not be restricted by embodiments of the present application, and the number of battery cells 20 may be one or more.

The carrying plate 11 includes the carrying region A and the connecting region B. The carrying region A of the carrying plate 11 and the connecting region B of the carrying plate 11 can be formed as a whole by the same material or can be connected together by welding and other processes using different materials. The embodiments of the present application does not limit this.

The battery cell 20 can be arranged in the carrying region A of the carrying plate 11. The size and shape of the carrying region A depend on the overall structural shape of all battery cells 20 in the accommodating chamber 14. Exemplarily, the battery cell 20 can be bonded to the carrying plate 11. The carrying region A may be a region on carrying plate 11 that needs to be coated with colloid. An orthographic projection of the battery cell 20 on the carrying plate 11 can be located within the carrying region A.

Exemplarily, the battery cell 20 is typically located in a center of the accommodating chamber 14, so the carrying region A can be typically located in a center position of the carrying plate 11. The connecting region B may be located on an outer side of carrying region A. The side beam 12 can be connected to connecting region B of carrying plate 11. The number of the connecting regions B can be one or more. When a plurality of connecting regions B are provided, at least one connecting region B can be connected to the reinforcing plate 13. Exemplarily, the number of the connecting regions B may be four and respectively arranged around the carrying region A.

The carrying plate 11 can be connected and fixed to the side beam 12. The side beam 12 can be arranged to be perpendicular to the carrying plate 11. Alternatively, an angle between side beam 12 and carrying plate 11 can be set as an acute angle or an obtuse angle according to the actual situation.

The battery cell 20 can be correspondingly arranged in the carrying region A. There is no battery cell 20 within a range of the accommodating chamber 14 corresponding to the connecting region B. Therefore, a part of the carrying plate 11 in the connecting region B cannot be integrally connected with the battery cell 20, resulting in the poor structural strength of the carrying plate 11 in the connecting region B, so that it is prone to deformation or damage under an impact of an external force.

On this basis, the reinforcing plate 13 can be arranged in the embodiments of the present application. The reinforcing plate 13 can be used to enhance the structural strength of the battery at a position of the connecting region B. Specifically, the reinforcing plate 13 can be connected to the carrying plate 11. The connection method between carrying plate 11 and reinforcing plate 13 includes but is not limited to bonding, welding, bolt connection and the like. The reinforcing plate 13 can be arranged at a side of the carrying plate 11 facing the accommodating chamber 14, or at the side of the carrying plate 11 away from the accommodating chamber 14. Alternatively, the reinforcing plate 13 can be arranged as a U-shaped structure, so that one part of the reinforcing plate 13 can be located at the side of the carrying plate 11 facing the accommodating chamber 14, and the other part of the reinforcing plate 13 can be located at the side of the carrying plate 11 away from the accommodating chamber 14.

At least a part of the reinforcing plate 13 overlaps with the connecting region B in the thickness direction Z of the carrying plate 11. An orthographic projection of the reinforcing plate 13 on the carrying plate 11 can be located within the connecting region B, or can coincide with the connecting region B, or can cover and exceed the connecting region B. The part of the reinforcing plate 13 that overlaps with the connecting region B can be integrally connected with the connecting region B of the carrying plate 11, thereby increasing the overall thickness at the position of the connecting region B and improving the structural strength and deformation resistance of the battery at the connecting region B.

The number of reinforcing plates 13 can be one or more. The number of reinforcing plates 13 will not be restricted by the embodiments of the present application. In addition, the orthographic projection of the reinforcing plate 13 on the carrying plate 11 can completely cover the carrying plate 11, or can merely overlap with a part of the structure of the carrying plate 11. And the material of the reinforcing plate 13 will not be restricted by the embodiments of the present application. Optionally, the reinforcing plate 13 can be made of the same material as the carrying plate 11, thereby achieving an integrated design of the reinforcing plate 13 and the carrying plate 11.

A thickness of the reinforcing plate 13 with not be restricted by the embodiment of this application. The minimum thickness of reinforcing plate 13 can be greater than, less than, or equal to the minimum thickness of carrying plate 11. The specific position of the reinforcing plate 13 with not be restricted by the embodiment of this application. The reinforcing plate 13 can be located at the position of the carrying plate 11 away from or close to the accommodating chamber 14. And the reinforcing plate 13 can be connected to the structure such as the side beams 12 in addition to connected to the connecting region B.

In embodiments of the present application, the reinforcing plate 13 can be provided, and the reinforcing plate 13 can at least partially overlaps with the connecting region B, so that the thickness at a position of the connecting region B can increase, the structural strength of the battery at the connecting region B can be improved, and the risk of deformation or damage of the connecting region B under an action of factors such as the impact of the external force can be reduced.

It should be noted that the casing body can further include a substrate 15 arranged at intervals with the carrying plate 11 in the thickness direction Z. The carrying plate 11, side beam 12 and substrate 15 together surround the accommodating chamber 14, thereby protecting the battery cell 20 located at an inside of the accommodating chamber 14.

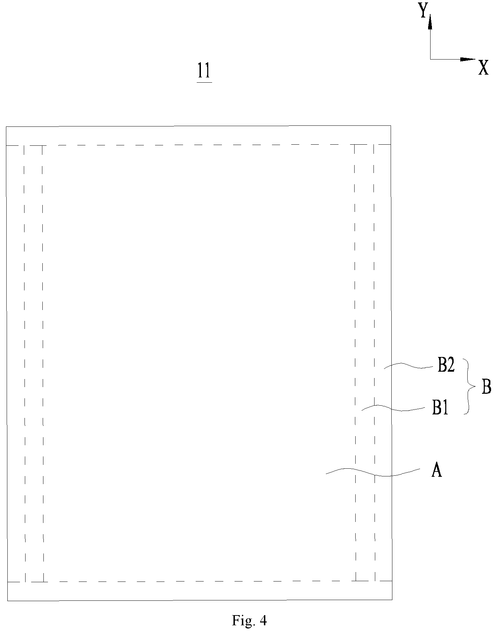

In some embodiments, referring to Fig. 4 to Fig.6, the minimum thickness of the reinforcing plate 13 is H, and 0.2 mm≤H≤30 mm. Exemplarily, H may be one of 0.2 mm, 1 mm, 5 mm, 10 mm, or 30 mm.

The thicknesses of reinforcing plate 13 at different positions can be the same or different. Exemplarily, the thicknesses of reinforcing plate 13 at different positions can depend on the thicknesses of carrying plate 11 at different positions. Specifically, when the thickness of the carrying plate 11 is uneven, the carrying plate 11 has a region with a relatively large thickness and a region with a relatively small thickness. As to the region with the relatively large thickness, the thickness of the reinforcing plate 13 at the corresponding position can increase; as to the region with the relatively small thickness, the thickness of the reinforcing plate 13 at the corresponding position can decrease. At different positions of the reinforcing plate 13, the thickness of the reinforcing plate 13 can be consistent with the sum of the thicknesses of the carrying plate 11, thereby improving the reliability of the structure of the battery.

Alternatively, when the thickness of the carrying plate 11 remains consistent throughout, the thickness of the reinforcing plate 13 can also be made consistent throughout. It should be noted that the expression "the minimum thickness of the reinforcing plate is H" mentioned in the embodiments of the present application refers to a minimum thickness of a plate at a specific position of the reinforcing plate 13. When the thickness of reinforcing plate 13 remains consistent at all positions, the minimum thickness H of reinforcing plate 13 refers to the thickness of the plate at any position of reinforcing plate 13.

The reinforcing plate 13 can improve the structural strength of the battery at the connecting region B. The thickness H is often positively correlated with the structural strength of the battery at the connecting region B. If the thickness H is too small, the reinforcing plate 13 has little effect on the thickness of the carrying plate 11 at the connecting region B, that is, it has little effect on the structural strength of the battery at the connecting region B. The battery is still prone to deformation or damage at the connecting region B, which is not conducive to the long-term use.

If the thickness H is too large, although it can effectively improve the structural strength of the battery at the position of the connecting region B, the increase in thickness often means the increase in weight, so that it will lead to the increase in total weight of the battery. However, a heavy battery is not conducive to the lightweight design of the vehicle, nor is it conducive to the fixing and connection between the battery and the vehicle chassis. In addition, if the reinforcing plate 13 is mounted in the accommodating chamber 14, the excessive thickness of the reinforcing plate 13 will cause it to occupy too much space, thereby affecting the available space of the battery cell 20, and causing the issues such as the waste of the space, the low energy density of the battery and the like.

In the embodiments of the present application, H can be set between 0.2 mm and 30 mm. Under a premise that the total weight of the battery is not greatly affected, the structural strength of the battery can be improved, the risk of deformation or damage of the battery can be reduced, and the reliability of the battery can be improved. Optionally, 0.5mm≤H≤10mm. Exemplarily, H may be one of 0.5 mm, 1 mm, 5 mm, 8 mm and 10 mm.

In some embodiments, a weight of the battery is M, and H and M satisfy: 0.0002 mm/kg≤H/M≤1 mm/kg. Exemplarily, H/M may be one of 0.0002 mm/kg, 0.002 mm/kg, 0.05 mm/kg, 0.3 mm/kg, or 1 mm/kg.

The expression "weight of the battery is M" mentioned in the embodiments of the present application refers to the total weight including the casing body, battery cell 20 and other portions located in the accommodating chamber 14. The weight M of the battery is often positively correlated with the capacity of the battery. According to the above contents, it can be seen that the reinforcing plate 13 can affect the weight M of the battery. Therefore, it is necessary to limit the relationship between the weight M of the battery and the weight of the reinforcing plate 13, that is, the relationship between the weight M of the battery and the minimum thickness H of reinforcing plate 13 should be restricted.

If the H/M is too small, it indicates that the thickness of the reinforcing plate 13 is too small relative to the entire battery, and therefore cannot meet the demand for enhancing the structural strength of the battery. If the H/M is too large, it indicates that the weight of other structures in the battery, except for the reinforcing plate 13, is too light. Furthermore, the weight of the battery cell 20 in the accommodating chamber 14 is too light, so that the battery capacity is too small, and the energy density is too low.

Therefore, in the embodiments of the present application, H/M can be set between 0.0002 mm/kg and 1 mm/kg. While ensuring the high energy density of the battery, the structural strength of the battery can be improved, and the risk of deformation or damage of the battery under the impact of the external force can be reduced. Optionally, 0.0006 mm/kg≤H/M≤0.2 mm/kg. Exemplarily, H/M may be one of 0.0006 mm/kg, 0.003 mm/kg, 0.01 mm/kg, 0.05 mm/kg and 0.2 mm/kg.

In some embodiments, a minimum thickness H of the reinforcing plate 13 may be less than or equal to a minimum thickness of the carrying plate 11.

The reinforcing plate 13 can be connected to the carrying plate 11 to increase the thickness of the battery at the place of at least part of the carrying plate, so that the structural strength of the battery can be improved. At the same time, the embodiments of the present application further takes into account the lightweight design of the battery. Thus, the thickness H can be set to be less than or equal to the minimum thickness of the carrying plate 11, so that a volume of the entire reinforcing plate 13 can be smaller than a volume of the carrying plate 11. The total weight of the battery can be reduced as much as possible while improving the structural strength. Optionally, the reinforcing plate 13 and the carrying plate 11 can be made of the same material. Thus, it can ensure that the weight of the reinforcing plate 13 is less than the weight of the carrying plate 11, so that it can be conducive to the lightweight design of the battery.

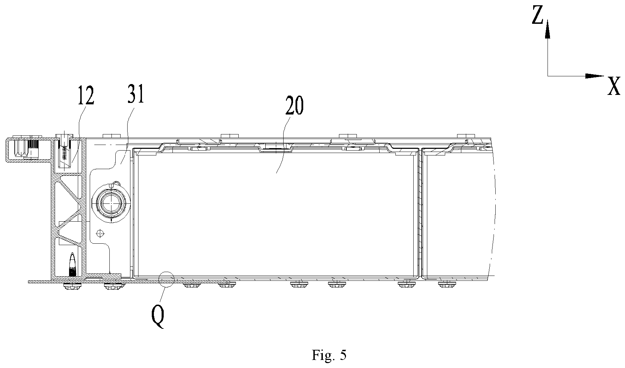

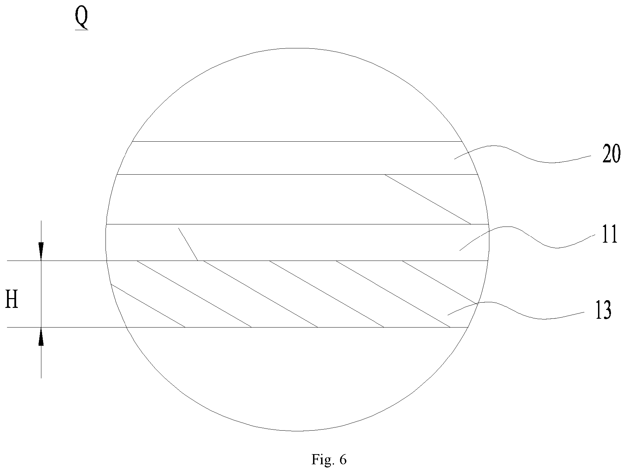

In some embodiments, as shown in Fig. 5 and Fig. 6, the reinforcing plate 13 can be located at the side of the carrying plate 11 away from the accommodating chamber 14.

The battery cell 20 is connected to the carrying plate 11 and located in the accommodating chamber 14, and the reinforcing plate 13 is located at the side of the carrying plate 11 away from the accommodating chamber 14. That is, the battery cell 20 and the reinforcing plate 13 can be located at two sides of the carrying plate 11 respectively, and the carrying plate 11 can separate the battery cell 20 from the reinforcing plate 13. Since the reinforcing plate 13 is located at the side of the carrying plate 11 away from the accommodating chamber 14, the reinforcing plate 13 will not occupy the inner space of the accommodating chamber 14, thereby not affecting the available space of the battery cell 20 in the accommodating chamber 14. In other words, more or larger battery cells 20 can be arranged in the accommodating chamber 14.

In addition, for a manufacturing process of the battery, since the reinforcing plate 13 is located at the side of the carrying plate 11 away from the accommodating chamber 14, the battery can be produced according to a traditional manufacturing process. After the production is completed, the reinforcing plate 13 can be fixed on the carrying plate 11 by welding or bolt connection, thereby enhancing the structural strength of the battery. Alternatively, the reinforcing plate 13 can be directly fixed and mounted on the vehicle chassis, and the battery manufactured through the traditional manufacturing process can be directly fixed on the reinforcing plate 13 located on the chassis, so as to achieve the fixed connection between the vehicle and the battery. Regardless of the manufacturing method, only an additional simple process needs to be added in the traditional manufacturing process, so that it can reduce the difficulty of manufacturing the battery.

In a word, in the embodiments of the present application, the reinforcing plate 13 can be arranged at the side of the carrying plate 11 away from the accommodating chamber 14, so that the arrangement of the reinforcing plate 13 will not occupy an internal space of the accommodating chamber 14 and will not affect the available space of the battery cell 20 in the accommodating chamber 14, thereby ensuring the energy density of the battery. At the same time, it can also reduce the difficulty of manufacturing the battery, which is conducive to the large-scale production and manufacture.

In some embodiments, as shown in Fig. 2 to Fig. 4, the connecting region B includes the first part B1 opposite to the accommodating chamber 14 in the thickness direction Z. The reinforcing plate 13 overlaps at least partially with the first part B1 in the thickness direction Z.

The expression "the first part B1 opposite to the accommodating chamber 14 in the thickness direction Z" mentioned in the embodiments of the present application means that the part of the accommodating chamber 14 where the orthographic projection on the carrying plate overlaps with the connecting region B is the first part B1 of the connecting region B. A contour of the position of the accommodating chamber 14 in the figures is shown in a form of dashed lines. It should be noted that a region bounded by the dashed lines does not constitute a limitation on the position, shape and size of the accommodating chamber 14 in the embodiments of the present application. The specific structure of the accommodating chamber 14 needs to be determined based on the specific structural layout of the inside of the battery.

According to the above contents, it can be seen that there is no battery cell 20 within a range corresponding to the connecting region B in the accommodating chamber 14. Furthermore, there is no battery cell 20 in a region corresponding to the first part B1 in the accommodating chamber 14. Thus, the first part B1 and the battery cell 20 cannot be connected together as a whole by bonding or other means. Compared to other positions of the carrying plate 11, the first part B1 is more prone to deformation or damage under the impact of the external force.

Therefore, the embodiment of this application will overlap at least part of the reinforcing plate 13 with the first part B1. The reinforcing plate 13 can be connected to the first part B1 through bonding, welding, and bolt connection to form a whole, thereby improving the structural strength and the pressure-proof capacity of the battery at the position of the first part B1, and reducing the risk of deformation or damage to the first part B1.

In some embodiments, the connecting region B further includes a second part B2. The second part B2 may overlap with and connect with the side beam 12 in the thickness direction Z.

The second part B2 is located at the side of the first part B1 away from the carrying region A. The first part B1 and the second part B2 can be made of the same material or different materials. And the thickness of the first part B1 can be the same as the thickness of the second part B2, or can be different from the thickness of the second part B2, which is not restricted by the embodiments of the present application. Exemplarily, the first part B1 and the second part B2 may be an integrated structure, the two parts may be made of the same material and have the same thickness.

The second part B2 may overlap with the side beam 12 in the thickness direction Z, that is, the orthographic projection of the side beam 12 on the carrying plate 11 may coincide with the second part B2 of the connecting region B. The second part B2 can be used to achieve the connection between the carrying plate 11 and the side beam 12. During the manufacturing process of carrying plate 11, a plurality of mounting holes can be arranged at a position of the second part B2, and the carrying plate 11 can be fixed to the side beam 12 be means of the bolt connection.

The second part B2 can be connected to the side beam 12 to form a whole, so that the side beam 12 can improve the structural strength of the battery at the position of the second part B2, reduce the risk of deformation or damage of the second part B2 under the impact of the external force, and improve the overall reliability of the battery.

It should be noted that the reinforcing plate 13 overlaps at least partially with the first part B1. For the second part B2, due to the side beam 12, the reinforcing plate 13 can be arranged at the position of the second part B2, or no reinforcing plate 13 is arranged. That is, the orthographic projection of the reinforcing plate 13 on the carrying plate 11 can overlap with the first part B1 or distributed in a staggered position, which is not limited by the embodiments of the present application.

In some embodiments, the carrying region A at least partially overlaps with the reinforcing plate 13 in the thickness direction Z.

The battery cell 20 can be arranged on the carrying region A of the carrying plate 11; the battery cell 20 can enhance the structural strength of the battery at the position of carrying region A. Generally, there is a colloid between the battery cell 20 and the carrying plate 11 to achieve the relative fixing between the battery cell 20 and the carrying plate 11. When the vehicle is running on a rough or dangerous terrain, the carrying plate 11 will generate vibration and transmit the vibration to the battery cell 20 to shake together. After a certain period of time, it is difficult to ensure the reliability of the relative position between the carrying plate 11 and the battery cell 20 by the colloid.

In the embodiments of the present application, the carrying region A overlaps with at least partially with the reinforcing plate 13, so that the reinforcing plate 13 can increase the overall thickness of at least some parts of the carrying region A, the impact of vibration can be reduced, the risk of debonding between the carrying plate 11 and the battery cell 20 can be reduced, and the reliability of a corresponding position between the carrying plate 11 and the battery cell 20 can increase. At the same time, the reinforcing plate 13 can also improve the structural strength of at least some parts of the carrying region A, thereby reducing the impact of the external force or other factors on the battery cell 20.

In some embodiments, the reinforcing plate 13 is connected to the side beam 12.

The side beam 12 can be connected to the carrying plate 11, and positions of the two can be kept relatively fixed. On this basis, the reinforcing plate 13 can be connected to the side beam 12, so that the reinforcing plate13 and the side beam 12 can keep fixing, thereby improving the reliability of a corresponding position between the reinforcing plate 13 and the carrying plate 11.

It should be noted that the specific connection position between the reinforcing plate 13 and the side beam 12 is not restricted by the embodiment of the present application. Specifically, the reinforcing plate 13 can be arranged on a surface of the carrying plate 11 facing the side beam 12, and then fixed at a bottom of the side beam 12. Alternatively, the reinforcing plate 13 can also be arranged as an L-shaped structure. The reinforcing plate 13 includes two parts perpendicular to each other, one part is located at the side of the carrying plate 11 away from the side beam 12, and the other part is located at the side of the side beam 12 away from the accommodating chamber 14 and fixedly connected to the side beam 12.

In addition, during the manufacturing process of the battery, the reinforcing plate 13 can be connected and fixed to the side beam 12 firstly, and then the reinforcing plate 13 and side beam 12 can be mounted on the carrying plate 11 as a whole, so as to ensure the reliability of the corresponding position between the reinforcing plate 13 and the side beam 12. Alternatively, the reinforcing plate 13 can be mounted on the carrying plate 11 firstly, and then the side beam 12 can be fixed to the reinforcing plate 13, so as to improve the reliability of the connection between the carrying plate 11 and the side beam 12.

In some embodiments, referring to Fig. 2, Fig. 3 and Fig. 7, a plurality of side beams 12 can be provided, the plurality of side beams 12 can be arranged in a circumference of the carrying plate 11, and the reinforcing plate 13 can be connected to at least one of the plurality of side beams 12.

The plurality of side beams 12 and the carrying plate 11 enclose together to form the accommodating chamber 14. Exemplarily, the number of side beams 12 is four, and the four side beams 12 are connected end-to-end and together form a square ring structure. Adjacent side beams 12 can be connected by welding, bonding, bolt or the like. And among the plurality of side beams 12, only some of them can be fixedly connected to the carrying plate 11, or all of them can be fixedly connected to the carrying plate 11, it will not be restricted by the embodiments of the present application.

The number of reinforcing plates 13 can be one or multiple. At least one reinforcing plate 13 can be connected and fixed to at least one side beam 12. Exemplarily, the number of reinforcing plates 13 corresponds to the number of side beams 12. The plurality of reinforcing plates 13 can be arranged in the circumferential direction of the carrying plate 11. The plurality of reinforcing plates 13 can correspond to the positions of the plurality of side beams 12. The reinforcing plate 13 and the side beam 12 with a corresponding relationship can be connected to each other.

In the embodiments of the present application, the plurality of side beams 12 can be sequentially connected end-to-end to form a closed-loop structure, and the plurality of side beams 12 can be located at an outer peripheral side of the accommodating chamber 14. At the same time, the reinforcing plate 13 can be connected to at least one of the plurality of side beams 12 to improve the reliability of the corresponding position among the side beams 12, reinforcing plate 13 and carrying plate 11, thereby ensuring the overall structural stability of the battery under different working conditions.

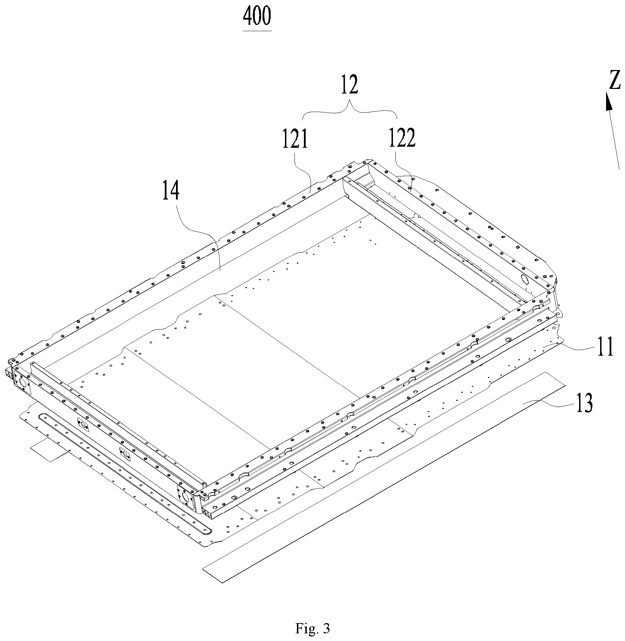

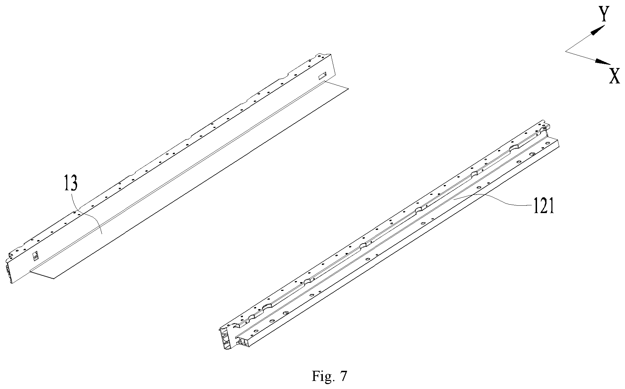

In some embodiments, as shown in Fig. 3 and Fig. 7, the plurality of side beams 12 includes two first side beams 121 and two second side beams 122, the two first side beams 121 are arranged in a width direction X, the two second side beams 122 are arranged in a length direction Y, and the width direction X intersects with the length direction Y. Each of the two second side beams 122 can be connected to the two first side beams 121. Two reinforcing plates 13 are provided, and the two reinforcing plates 13 are arranged to be spaced apart from each other in the width direction X and connected to the two first side beams 121 respectively.

The second side beams 122 can be used to connect and fix the two first side beams 121 arranged at intervals. Two first side beams 121 can be arranged at intervals in the width direction X and both of them extend in the length direction Y. Two second side beams 122 can be arranged at intervals in the length direction Y and both of them extend in the width direction X. Exemplarily, the width direction X can be arranged to be perpendicular to the length direction Y.

Due to the restriction of the internal structure of the battery, the distance between the battery cell 20 and the first side beam 121 is too large. Exemplarily, as shown in Fig. 2, the accommodating chamber 14 includes not only the battery cell 20, but also a heat-managing portion 30. The heat-managing portion 30 can be used to regulate the temperature of the inside of the battery unit 20, so as to ensure the battery unit 20 maintain a suitable temperature for operation.

The heat-managing portion 30 includes a heat-exchanging plate 31 and a confluence tube 32 for connecting a plurality of heat-exchanging plates 31. The heat-exchanging plate 31 can be attached to or adjacent to the battery cell 20 and can be a main portion used to adjust the temperature of the battery cell 20. Generally, there is a channel allowing fluid to pass through in the heat-exchanging plate. When the battery needs to be cooled down, a cold fluid can be conveyed to the heat-exchanging plate 31. The cold fluid can flow in the channel and carry away some of the heat from the battery cell 20, thereby achieving a cooling operation. When the battery needs to be heated up, a hot fluid can be conveyed to the heat-exchanging plate 31. The heat fluid can flow in the channel and provide some heat to the corresponding battery cell 20, thereby achieving a heating operation.

The confluence tube 32 can be connected to the channel of the heat-exchanging plate 31 for conveying or transferring the cold fluid and the hot fluid to one or more heat-exchanging plates 31. The confluence tube 32 is typically located between the battery cell 20 and the first side beam 121. Due to the confluence tube 32, the distance between the battery cell 20 and the first side beam 121 may be too large, resulting in the width of the connecting region B being too large. The battery is prone to deformation or damage at the connecting region B between the battery cell 20 and the first side beam 121.

Therefore, in the embodiments of the present application, two reinforcing plates 13 can be provided, and the two reinforcing plates 13 can be connected to the two first side beams 121 respectively, thereby improving the structural strength of carrying plate 11 corresponding to the connecting region B between the battery cell 20 and the first side beams 121.

In addition, in the embodiments of the present application, the two reinforcing plates 13 may be two small plates arranged at intervals, that is, the orthographic projections of the two reinforcing plates 13 on the carrying plate 11 will only coincide with a part of the structure of the carrying plate 11. Compared to the scheme of arranging the reinforcing plate 13 to cover the entire carrying plate 11, this design can improve the structural strength of the battery while reducing the total weight of the reinforcing plate 13, so that it can be conducive to the lightweight design of the battery.

It should be noted that sizes of the two reinforcing plates 13 and the distance between them will not be restricted by the embodiments of the present application. Exemplarily, as shown in Fig. 4 and Fig. 7, the orthographic projections of the two reinforcing plates 13 on the carrying plate 11 can coincide with the first part B1, and the distance between the two reinforcing plates 13 may be a size of the carrying region A in the width direction X.

In some embodiments, the reinforcing plate 13 has a support region C, and the support region C can overlap with the carrying plate 11 in the thickness direction Z thereof.

In the embodiment of the application, the expression "the support region C can overlap with the carrying plate 11 in the thickness direction Z thereof" means that: the part of the reinforcing plate 13 whose orthographic projection on the carrying plate 11 overlaps with the carrying plate 11 is the support region C of the reinforcing plate 13, and the support region C of the reinforcing plate 13 is mainly used to improve the structural strength at a specific position of the carrying plate 11.

It should be noted that, depending on the structure of the reinforcing plate 13, the reinforcing plate 13 may be entirely the support region C, or may include other parts except the support region C. Exemplarily, as shown in Fig. 3 and Fig. 7, when all the reinforcing plate 13 is located at the side of the carrying plate 11 away from the accommodating chamber 14, and all the orthographic projection of the reinforcing plate 13 on the carrying plate 11 is located within an outer contour of the carrying plate 11, all the reinforcing plate 13 may be the support region C. Alternatively, when the reinforcing plate 13 is an L-shaped structure mentioned in the above embodiments, one part of the reinforcing plate 13 located at the side of the carrying plate 11 away from the accommodating chamber 14 may be the support region C, while another part of the reinforcing plate 13 located at the side of the side beam 12 away from the accommodating chamber 14 may be the other part of the reinforcing plate 13 except for the support region C.

In some embodiments, a part of the carrying plate 11 may be located between the first side beams 121 and the reinforcing plate 13, and may be connected to the first side beams 121 and the reinforcing plate 13.

The "a part of the carrying plate 11 may be located between the first side beams 121 and the reinforcing plate 13" mentioned in the embodiments of the application means that a part of the structure in the carrying plate 11 may be located between the first side beams 121 and the reinforcing plate 13 in the thickness direction Z of the carrying plate 11, that is, the orthographic projection of each of the first side beams 121 and the reinforcing plate 13 on the carrying plate 11 at least partially overlaps with each other.

The carrying plate 11 separates the first side beams 121 from the reinforcing plate 13. The carrying plate 11 has two opposite surfaces in the thickness direction Z. One of the surfaces can be arranged to face the side beam 12 and can be fixed to the side beam 12 through welding or bonding. The other one of the surfaces can be arranged to face the reinforcing plate 13 and can also be fixed to the reinforcing plate 13 through welding or bonding.

In the embodiments of the present application, the relative position relationship between the first side beams 121 and the reinforcing plate 13 can be controlled, so that a part of the carrying plate 11 can be simultaneously located between the first side beams 121 and the reinforcing plate 13. The connection among the carrying plate 11, reinforcing plate 13 and the first side beams 121 can be simultaneously achieved through the part of the carrying plate 11. Compared to the scheme of mounting the first side beams 121 and reinforcing plate 13 in a staggered position on the carrying plate 11, this design can allow more regions on the carrying plate 11 for placing the battery cell 20, thereby improving the energy density of the battery.

In some embodiments, the reinforcing plate 13 and the first side beams 121 are integrally formed.

The reinforcing plate 13 and the first side beams 121 can be integrally formed, so that the reliability of the connection between the reinforcing plate 13 and the first side beams 121 can be improved, and the risk of connection failure caused by the impact of the external force or other factors can be reduced. In addition, during the manufacturing process of the battery, the reinforcing plate 13 and the first side beams 121 can be integrally formed firstly, so as to connect the reinforcing plate 13 with the first side beams 121 as a whole, then the whole formed by the reinforcing plate 13 and the first side beams 121 can be connected at a specific position of the carrying plate 11, so that the accuracy of the positions of the first side beams 121, the reinforcing plate 13 and the carrying plate 11 can be improved.

In the embodiment of the present application, it should be noted that the reinforcing plate 13 and the first side beams 121 can be made of the same material, and the carrying plate 11 can be made of the same or different material as the first side beams 121. The embodiments of the present application does not limit this.

In some embodiments, the material of the reinforcing plate 13 may include at least one of steel and aluminum alloy.

Both the steel and the aluminum alloy are the materials with the strong structural strength. Compared with other materials, the steel and the aluminum alloys can greatly reduce the overall weight of the reinforcing plate 13 while ensuring the structural strength, thereby reducing the overall weight of the battery and contributing to the lightweight design of the battery.

In a second aspect, the embodiments of the present application provide the battery. As shown in Fig. 2 and Fig. 4, the battery may include the casing body according to any one of embodiments as described above and the battery cell 20. The battery cell 20 can be accommodated in the accommodating chamber 14 and connected to the carrying region A of the carrying plate 11.

It should be noted that the battery provided in the embodiment of the present application can have the beneficial effect of the casing body in any one of embodiments as described above. For details, please refer to the foregoing description of the beneficial effects of the casing body, and the embodiments of the present application will not be repeated here.

In some embodiments, the battery cells 20 are bonded to the carrying region A.

A colloid can be arranged between the battery cell 20 and the carrying plate 11. A coating region of the colloid on the carrying plate 11 may be generally the carrying region A of the carrying plate 11. The colloid can be used to achieve the fixation between battery cell 20 and carrying plate 11. And during the bonding process, some of the colloid may usually overflow from both sides of the battery and fill a region between the battery cell 20 and the side beam 12. This part of the colloid can achieve bonding and fixing between the battery cell 20 and the side beam 12 to a certain extent, thereby improving the reliability of the structure of the battery.

In some embodiments, the reinforcing plate 13 at least partially may overlap with the battery cell 20 in the thickness direction Z of the carrying plate 11.

In the embodiment of the application, "the reinforcing plate 13 at least partially may overlap with the battery cell 20" means that the orthographic projection of the reinforcing plate 13 on the carrying plate 11 may at least partially overlap with the orthographic projection of the battery cell 20 on the carrying plate 11.

According to the above contents, the reinforcing plate 13 can be used to enhance the structural strength of the battery at the connecting region B, that is, to enhance the structural strength of the region between the battery cell 20 and the side beam 12. On this basis, in the embodiments of the present application, the reinforcing plate 13 can at least partially overlap with the battery cell 20, so that the reinforcing plate 13 can also have a structural reinforcement effect on at least a part of the region in the battery corresponding to where the battery cells are located, and the structural strength of the battery can be further improved.

In some embodiments, a plurality of battery cells 20 can be provided, the plurality of battery cells 20 form a battery pack, and a gap can be formed between the battery pack and the side beam 12. At least part of the reinforcing plate 13 may be arranged opposite to the gap in the thickness direction Z.

The battery pack can be formed by the plurality of battery cells 20 connected in series, in parallel or in mixed together. Generally, the battery pack can be spaced apart from the side beam 12 to form the gap for avoiding portions at the inside of the battery.

The "at least part of the reinforcing plate 13 may be arranged opposite to the gap in the thickness direction Z" mentioned in the embodiments of the present application means that the orthographic projection of the region where the gap is located on the carrying plate 11 may at least partially overlap with at least part of the orthographic projection of the reinforcing plate 13 on the carrying plate 11. Herein, the gap corresponds to the first part B1 in the carrying plate 11.

In addition, the number, the specific shapes and sizes of the gaps are not limited in the embodiments of the present application. Exemplarily, the number of gaps may be four and the gaps may be arranged to enclose on the peripheral side of the battery pack.

The gap makes the structural strength of the battery at the position of the gap insufficient. Therefore, in the embodiments of the present application, at least part of the reinforcing plate 13 may be arranged opposite to the gap, so that the structural strength and the pressure-proof capacity of the battery at the position of the gap can be improved, and the risk of deformation or damage in the gap can be reduced.

In some embodiments, the battery may further include a heat-managing portion 30, and the heat-managing portion 30 is configured to adjust a temperature of the battery cell 20. A projection of the heat-managing portion 30 at least partially overlaps with a projection of the reinforcing plate 13 in the thickness direction.

According to the above contents, it can be seen that the battery pack and side beam 12 are arranged to be spaced apart from each other to form the gap for accommodating the portions at the inside of the battery. Exemplarily, the heat-managing portion 30 may include a plurality of heat-exchanging tubes and the confluence tube 32 that connects the plurality of heat-exchanging tubes. The confluence tube 32 can be located in the gap between the battery pack and side beam 12. It should be noted that the number of confluence tubes 32 can be the same as the number of gaps or different from the number of gaps, that is, some of gaps may not be provided with the confluence tube 32. The specific structure needs to be determined based on the actual situation of the battery, which is not restricted by the embodiments of the present application.

At least part of the heat-managing portion 30 may be located in the gap. If the structural strength of the battery at the corresponding position of the gap is insufficient, the deformation or damage of the carrying plate 11 under the impact of the external force or other factors can easily have adverse effects on the heat-managing portion 30, which may lead to the decrease in the overall temperature-adjusting effect of the battery and easily cause the safety hazards.

Therefore, in the embodiments of the present application, the projection of the heat-managing portion 30 can at least partially overlap with the projection of the reinforcing plate 13, so that the structural strength at the position of the heat-managing portion 30 can be improved, the impact of the external force or other factors on the heat-managing portion can be reduced, and the reliability and safety of the battery can be improved.

In a third aspect, the embodiments of the present application provide an electricity-consuming apparatus, including the battery according to any one of embodiments as described above. The battery is configured to provide electrical power.

It should be noted that the electricity-consuming apparatus provided by the embodiments of the present application has the beneficial effect of the battery in any one of the embodiments as described above. Please refer to the description of the beneficial effects of the battery as described above, and the embodiments of the present application will not be repeated.

According to some embodiments provided by the present application, as shown in Fig. 2 to Fig. 5, the battery may include the casing body, the battery cell 20 located in the casing body and the heat-managing portion 30. The casing body may include the carrying plate 11, the side beam 12 and the reinforcing plate 13. The side beam 12 and the carrying plate 11 may enclose to form the accommodating chamber 14 for accommodating the plurality of battery cells 20 and the heat-managing portion 30. The carrying plate 11 may include the carrying region A and the connecting region B. The connecting region B may include the first part B1 and the second part B2 located at the side of the first part B1 away from the carrying region A. The side beam 12 may be connected to the second part B2.

The battery pack can be formed by the plurality of battery cells 20 together. The battery pack may be bonded to the carrying region A of the carrying plate 11. There is the gap between the battery pack and side beam 12. The heat-managing portion 30 may be at least partially located in the gap. The orthographic projection of the gap on the carrying plate 11 may overlap with the first part B1.

The number of the reinforcing plates 13 may be two. The two reinforcing plates 13 can be arranged at intervals in the width direction X, and the orthographic projection of the reinforcing plate on the carrying plate 11 may at least partially overlap with the first part B1.

It should be noted that in the absence of conflicts, the embodiments and the features in the embodiments of the present application can be combined with one another.

Finally, it should be noted that the above embodiments are merely used to illustrate the technical solutions of the present application, and are not intended to restrict the present application. Although the present application has been described in detail with reference to the aforementioned embodiments, ordinary technical personnel in this field should understand that: the technical solutions recorded in the aforementioned embodiments can still be modified, or some of the technical features can be equivalently replaced. However, these modifications or substitutions do not separate the essence of the corresponding technical solutions from the gist and scope of the technical solutions of the various embodiments of this application.

## Claims

1. A casing body of a battery, comprising:
a carrying plate, comprising a carrying region and a connecting region, wherein the carrying region is configured to place a battery cell;
a side beam, wherein the side beam and the carrying plate enclose to form an accommodating chamber for accommodating the battery cell, and the side beam is connected to the connecting region; and
a reinforcing plate, wherein at least a part of the reinforcing plate overlaps with the connecting region in a thickness direction of the carrying plate and is connected to the connecting region.

2. The casing body according to claim 1, wherein a minimum thickness of the reinforcing plate is H, and 0.2 mm≤H≤30 mm.

3. The casing body according to claim 2, wherein 0.5 mm≤H≤10 mm.

4. The casing body according to any one of claims 1-3, wherein a minimum thickness of the reinforcing plate is H, a weight of the battery is M, and H and M satisfy: 0.0002 mm/kg≤H/M≤1 mm/kg.

5. The casing body according to claim 4, wherein H and M satisfy: 0.0006 mm/kg≤H/M≤0.2 mm/kg.

6. The casing body according to any one of claims 1-5, wherein a minimum thickness of the reinforcing plate is less than or equal to a minimum thickness of the carrying plate.

7. The casing body according to any one of claims 1-6, wherein the reinforcing plate is located at a side of the carrying plate away from the accommodating chamber.

8. The casing body according to any one of claims 1-7, wherein the carrying region at least partially overlaps with the reinforcing plate in the thickness direction.

9. The casing body according to any one of claims 1-8, wherein the reinforcing plate is connected to the side beam.

10. The casing body according to claim 9, wherein a plurality of side beams are provided, and the plurality of side beams are arranged in a circumferential direction of the carrying plate; and
the reinforcing plate is connected to at least one of the plurality of side beams.

11. The casing body according to claim 10, wherein the plurality of side beams comprise two first side beams and two second side beams, the two first side beams are arranged to be spaced apart from each other in a width direction of the casing body, the two second side beams are arranged to be spaced apart from each other in a length direction of the casing body, and each of the two second side beams is connected to the two first side beams; and
two reinforcing plates are provided, and the two reinforcing plates are arranged to be spaced apart from each other in the width direction and connected to the two first side beams respectively.

12. The casing body according to claim 11, wherein a part of the carrying plate is located between the first side beams and the reinforcing plates, and is connected to the first side beams and the reinforcing plates.

13. The casing body according to claim 11, wherein the reinforcing plate and the first side beams are integrally formed.

14. A battery, comprising:
the casing body according to any one of claims 1-13, and
a battery cell, accommodated in the accommodating chamber and connected to the carrying region of the carrying plate.

15. The battery according to claim 14, wherein the reinforcing plate at least partially overlaps with the battery cell in the thickness direction of the carrying plate.

16. The battery according to claim 14 or 15, wherein a plurality of battery cells are provided, and the plurality of battery cells form a battery pack;
a gap is arranged between the battery pack and the side beam;
at least a part of the reinforcing plate is arranged opposite to the gap in the thickness direction.

17. The battery according to any one of claims 14-16, further comprising a heat-managing portion, wherein the heat-managing portion is configured to adjust a temperature of the battery cell;
a projection of the heat-managing portion at least partially overlaps with a projection of the reinforcing plate in the thickness direction.

18. An electricity-consuming apparatus, comprising the battery according to any one of claims 14-17, wherein the battery is configured to provide electrical power.
